(19) Europäisches Patentamt
European Patent Office
Office européen des brevets

(11) EP 4 617 348 A2

(12) # EUROPEAN PATENT APPLICATION

(43) Date of publication:
**17.09.2025 Bulletin 2025/38**

(21) Application number: **25180034.8**

(22) Date of filing: **20.07.2021**

(51) International Patent Classification (IPC):
***C10N 60/14*** *(2006.01)*

(52) Cooperative Patent Classification (CPC):
(C-Sets available)
**C10M 141/12;** C10M 2203/1025; C10M 2207/144; C10M 2207/146; C10M 2207/262; C10M 2215/064; C10M 2215/28; C10M 2219/044; C10M 2223/045; C10N 2010/04; C10N 2020/071; C10N 2030/24; C10N 2040/14; C10N 2040/25; C10N 2060/14;
(Cont.)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.07.2020 US 202063054275 P**

(62) Document number(s) of the earlier application(s) in accordance with Art. 76 EPC:
**21749704.9 / 4 185 676**

(71) Applicants:
- **Chevron Oronite Company LLC**
  **San Ramon, CA 94583 (US)**
- **Chevron Japan Ltd.**
  **Tokyo 105-6218 (JP)**

(72) Inventors:
- **TANAKA, Isao**
  **Minato-ku, 105-6218 (JP)**
- **MILLER, John Robert**
  **San Ramon, 94583 (US)**

(74) Representative: **Haseltine Lake Kempner LLP**
**One Portwall Square**
**Portwall Lane**
**Bristol BS1 6BH (GB)**

Remarks:
•This application was filed on 30.05.2025 as a divisional application to the application mentioned under INID code 62.
•Claims filed after the date of filing of the application / after the date of receipt of the divisional application (Rule 68(4) EPC).

(54) **MAGNESIUM AND BORON CONTAINING LUBRICATING OIL COMPOSITION FOR HYBRID VEHICLES**

(57) Disclosed is a method for maintaining emulsion stability in a hybrid engine. The method involves lubricating and operating the hybrid engine with a lubricating oil composition having a major amount of an oil of lubricating viscosity; minor amount of a magnesium containing detergent; and a minor amount of a borated dispersant.

EP 4 617 348 A2

(52) Cooperative Patent Classification (CPC): (Cont.)
Y02T 10/62

C-Sets
C10M 2207/129, C10N 2010/04;
C10M 2207/146, C10N 2010/04;
C10M 2207/262, C10N 2010/04;
C10M 2215/28, C10N 2060/14;
C10M 2219/044, C10N 2010/04

## Description

### BACKGROUND OF THE DISCLOSURE

Modem lubricating oil formulations are formulated to exacting specifications often set by original equipment manufacturers. To meet such specifications, various additives are used, together with base oils of lubricating viscosity. Depending on the application, a typical lubricating oil composition may contain dispersants, detergents, anti-oxidants, wear inhibitors, rust inhibitors, corrosion inhibitors, foam inhibitors, and friction modifiers just to name a few. Different applications will govern the type of additives that will go into a lubricating oil composition.

Hybrid vehicles are driven mainly by an electric motor at low speeds and driven by an internal combustion engine at high speeds. A battery which powers the electric motor is typically charged through regenerative braking and by the internal combustion engine. There is a parallel system in which the motor assists the engine during acceleration. A series/parallel system distributes the power input from the engine and the motor in a well-balanced manner as the speed increases, with the main drive being the motor at the start and low speed.

**In** these hybrid vehicles, the engine is stopped when the vehicle comes to a stop, and the engine fuel system is also suspended when the vehicle is driven only by motor or braking. Therefore, the engine repeatedly goes through start-stop cycles during normal operation.

Consequently, the engine oil used for hybrid vehicles operates in a different environment compared to the engine oil of an automobile driven only by a conventional engine. Since hybrid vehicles run the engine only for short periods of time, there is the problem of accumulating water and fuel in the oil as the engine would not be able to sufficiently evaporate out the water and fuel through prolonged operation. This results in the formation of unstable emulsions which negatively impact engine performance.

Therefore, a composition that improves protection of engine parts by keeping a significant amount of water (generated from low temperature operation) in the oil by forming a stable emulsion is needed.

### SUMMARY OF THE DISCLOSURE

Disclosed is an internal combustion engine lubricating oil composition for maintaining emulsion stability in the engine of a hybrid vehicle as determined by the modified ASTM D7563 method. Also disclosed are methods for using said lubricating oil composition for maintaining emulsion stability in the engine of a hybrid vehicle.

In one aspect, there is provided a method for maintaining emulsion stability in a hybrid engine, said method comprising lubricating and operating the hybrid engine with a lubricating oil composition comprising: a major amount of an oil of lubricating viscosity; a minor amount of a magnesium containing detergent; and a minor amount of a borated dispersant.

In another aspect, there is provided a method of operating a hybrid engine, said method comprising: lubricating and operating the hybrid engine with the lubricating oil composition comprising: a major amount of an oil of lubricating viscosity; a minor amount of a magnesium containing detergent; and a minor amount of a borated dispersant.

In a further aspect, there is provided a use of a lubricating oil composition to improve emulsification of water and/or fuel contamination in a hybrid engine comprising: providing to the hybrid engine a lubricating oil composition comprising: a major amount of an oil of lubricating viscosity; a minor amount of a magnesium containing detergent; and a minor amount of a borated dispersant.

### DETAILED DESCRIPTION OF THE DISLCOSURE

While the disclosure is susceptible to various modifications and alternative forms, specific embodiments thereof are herein described in detail. It should be understood, however, that the description herein of specific embodiments is not intended to limit the disclosure to the particular forms disclosed, but on the contrary, the intention is to cover all modifications, equivalents, and alternatives falling within the spirit and scope of the disclosure as defined by the appended claims.

To facilitate the understanding of the subject matter disclosed herein, a number of terms, abbreviations or other shorthand as used herein are defined below. Any term, abbreviation or shorthand not defined is understood to have the ordinary meaning used by a skilled artisan contemporaneous with the submission of this application.

### DEFINITIONS

As used herein, the following terms have the following meanings, unless expressly stated to the contrary. In this specification, the following words and expressions, if and when used, have the meanings given below.

A "major amount" means in excess of 50 weight % of a composition.

A "minor amount" means less than 50 weight % of a composition, expressed in respect of the stated additive and in respect of the total mass of all the additives present in the composition, reckoned as active ingredient of the additive or additives.

"Active ingredients" or "actives" or "oil free" refers to additive material that is not diluent or solvent.

All percentages reported are weight % on an active ingredient basis (i.e., without regard to carrier or diluent oil) unless otherwise stated.

The abbreviation "ppm" means parts per million by weight, based on the total weight of the lubricating oil composition.

High temperature high shear (HTHS) viscosity at 150°C was determined in accordance with ASTM D4683.

Kinematic viscosity at 100°C ($KV_{100}$) was determined in accordance with ASTM D445.

Metal - The term "metal" refers to alkali metals, alkaline earth metals, or mixtures thereof.

Throughout the specification and claims the expression oil soluble or dispersible is used. By oil soluble or dispersible is meant that an amount needed to provide the desired level of activity or performance can be incorporated by being dissolved, dispersed or suspended in an oil of lubricating viscosity. Usually, this means that at least about 0.001% by weight of the material can be incorporated in a lubricating oil composition. For a further discussion of the terms oil soluble and dispersible, particularly "stably dispersible", see U.S. Pat. No. 4,320,019 which is expressly incorporated herein by reference for relevant teachings in this regard.

The term "sulfated ash" as used herein refers to the non-combustible residue resulting from detergents and metallic additives in lubricating oil. Sulfated ash may be determined using ASTM Test D874.

The term "Total Base Number" or "TBN" as used herein refers to the amount of base equivalent to milligrams of KOH in one gram of sample. Thus, higher TBN numbers reflect more alkaline products, and therefore a greater alkalinity. TBN was determined using ASTM D 2896 test.

Boron, calcium, magnesium, molybdenum, phosphorus, sulfur, and zinc contents were determined in accordance with ASTM D5185.

Nitrogen content was determined in accordance with ASTM D4629.

All ASTM standards referred to herein are the most current versions as of the filing date of the present application.

Olefins - The term "olefins" refers to a class of unsaturated aliphatic hydrocarbons having one or more carbon-carbon double bonds, obtained by a number of processes. Those containing one double bond are called mono-alkenes, and those with two double bonds are called dienes, alkyldienes, or diolefins. Alpha olefins are particularly reactive because the double bond is between the first and second carbons. Examples are 1-octene and 1-octadecene, which are used as the starting point for medium-biodegradable surfactants. Linear and branched olefins are also included in the definition of olefins.

Normal Alpha Olefins - The term "Normal Alpha Olefins" "refers to olefins which are straight chain, non-branched hydrocarbons with carbon-carbon double bond present in the alpha or primary position of the hydrocarbon chain.

Isomerized Normal Alpha Olefin. The term "Isomerized Normal Alpha Olefin" as used herein refers to an alpha olefin that has been subjected to isomerization conditions which results in an alteration of the distribution of the olefin species present and/or the introduction of branching along the alkyl chain. The isomerized olefin product may be obtained by isomerizing a linear alpha olefin containing from about 10 to about 40 carbon atoms, preferably from about 20 to about 28 carbon atoms, and preferably from about 20 to about 24 carbon atoms.

$C_{10-40}$ Normal Alpha Olefins - This term defines a fraction of normal alpha olefins wherein the carbon numbers below 10 have been removed by distillation or other fractionation methods.

Unless otherwise specified, all percentages are in weight percent.

While the disclosure is susceptible to various modifications and alternative forms, specific embodiments thereof are herein described in detail. It should be understood, however, that the description herein of specific embodiments is not intended to limit the disclosure to the particular forms disclosed, but on the contrary, the intention is to cover all modifications, equivalents, and alternatives falling within the spirit and scope of the disclosure as defined by the appended claims.

Note that not all of the activities described in the general description or the examples are required, that a portion of a specific activity may not be required, and that one or more further activities may be performed in addition to those described. Still further, the order in which activities are listed is not necessarily the order in which they are performed.

Benefits, other advantages, and solutions to problems have been described herein with regard to specific embodiments. However, the benefits, advantages, solutions to problems, and any feature(s) that may cause any benefit, advantage, or solution to occur or become more pronounced are not to be construed as a critical, required, or essential feature of any or all the claims.

The specification and illustrations of the embodiments described herein are intended to provide a general understanding of the structure of the various embodiments.

As used herein, the terms "comprises," "comprising," "includes," "including," "has," "having," or any other variation thereof, are intended to cover a non-exclusive inclusion. For example, a process, method, article, or apparatus

that comprises a list of features is not necessarily limited only to those features but may include other features not expressly listed or other features that are inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The use of "a" or "an" is employed to describe elements and components described herein. This is done merely for convenience and to give a general sense of the scope of the embodiments of the disclosure. This description should be read to include one or at least one and the singular also includes the plural, or vice versa, unless it is clear that it is meant otherwise. The term "averaged," when referring to a value, is intended to mean an average, a geometric mean, or a median value. Group numbers corresponding to columns within the Periodic Table of the elements use the "New Notation" convention as seen in the CRC Handbook of Chemistry and Physics, 81st Edition (2000-2001).

Unless otherwise defined, all technical and scientific terms used herein have the same meaning as commonly understood by one of ordinary skill in the art to which this disclosure belongs. The materials, methods, and examples are illustrative only and not intended to be limiting. To the extent not described herein, many details regarding specific materials and processing acts are conventional and may be found in textbooks and other sources within the lubricants as well as the oil and gas industries.

The specification and illustrations are not intended to serve as an exhaustive and comprehensive description of all the elements and features of formulations, compositions, apparatus and systems that use the structures or methods described herein. Separate embodiments may also be provided in combination in a single embodiment, and conversely, various features that are, for brevity, described in the context of a single embodiment, may also be provided separately or in any sub-combination. Further, reference to values stated in ranges includes each and every value within that range. Many other embodiments may be apparent to skilled artisans only after reading this specification. Other embodiments may be used and derived from the disclosure, such that a structural substitution, logical substitution, or another change may be made without departing from the scope of the disclosure. Accordingly, the disclosure is to be regarded as illustrative rather than restrictive.

Disclosed is an internal combustion engine lubricating oil composition which maintains emulsion stability in the engine of a hybrid vehicle comprising:

a major amount of an oil of lubricating viscosity;
a minor amount of a magnesium containing detergent; and
a minor amount of a borated dispersant.

Also disclosed is a method for improving the ability of a lubricating oil contaminated with water and fuel to emulsify water contamination in the engine of a hybrid vehicle.

Also disclosed is a method for maintaining emulsion stability in a hybrid engine as determined by the modified ASTM D7563 test (disclosed herein), said method comprising lubricating and operating a hybrid engine with a lubricating oil composition comprising:

a major amount of an oil of lubricating viscosity;
a minor amount of a magnesium containing detergent; and
a minor amount of a borated dispersant.

Also disclosed is the use of a lubricating oil composition to lubricate an internal combustion engine comprising:

a major amount of an oil of lubricating viscosity;
a minor amount of a magnesium containing detergent; and
a minor amount of a borated dispersant, wherein the lubricating oil
composition maintains emulsion stability in the engine of a hybrid vehicle as determined by the modified ASTM D7563 method.

## Oil of lubricating viscosity

The oil of lubricating viscosity (sometimes referred to as "base stock" or "base oil") is the primary liquid constituent of a lubricant, into which additives and possibly other oils are blended, for example to produce a final lubricant (or lubricant composition). A base oil is useful for making concentrates as well as for making lubricating oil compositions therefrom, and may be selected from natural and synthetic lubricating oils and combinations thereof.

Natural oils include animal and vegetable oils, liquid petroleum oils and hydrorefined, solvent-treated mineral lubricating oils of the paraffinic, naphthenic and mixed paraffinic-naphthenic types. Oils of lubricating viscosity derived

from coal or shale are also useful base oils.

Synthetic lubricating oils include hydrocarbon oils such as polymerized and interpolymerized olefins (e.g., polybutylenes, polypropylenes, propylene-isobutylene copolymers, chlorinated polybutylenes, poly(1-hexenes), poly(1-octenes), poly(1-decenes); alkylbenzenes (e.g., dodecylbenzenes, tetradecylbenzenes, dinonylbenzenes, di(2-ethylhexyl)benzenes; polyphenols (e.g., biphenyls, terphenyls, alkylated polyphenols); and alkylated diphenyl ethers and alkylated diphenyl sulfides and the derivatives, analogues and homologues thereof.

Another suitable class of synthetic lubricating oils comprises the esters of dicarboxylic acids (e.g., malonic acid, alkyl malonic acids, alkenyl malonic acids, succinic acid, alkyl succinic acids and alkenyl succinic acids, maleic acid, fumaric acid, azelaic acid, suberic acid, sebacic acid, adipic acid, linoleic acid dimer, phthalic acid) with a variety of alcohols (e.g., butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarboxylic acids and polyols, and polyol ethers such as neopentyl glycol, trimethylolpropane, pentaerythritol, dipentaerythritol and tripentaerythritol.

The base oil may be derived from Fischer-Tropsch synthesized hydrocarbons. Fischer-Tropsch synthesized hydrocarbons are made from synthesis gas containing $H_2$ and CO using a Fischer-Tropsch catalyst. Such hydrocarbons typically require further processing in order to be useful as the base oil. For example, the hydrocarbons may be hydroisomerized; hydrocracked and hydroisomerized; dewaxed; or hydroisomerized and dewaxed; using processes known to those skilled in the art.

Unrefined, refined and re-refined oils can be used in the present lubricating oil composition. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be unrefined oil. Refined oils are similar to the unrefined oils except they have been further treated in one or more purification steps to improve one or more properties. Many such purification techniques, such as distillation, solvent extraction, acid or base extraction, filtration and percolation are known to those skilled in the art.

Re-refined oils are obtained by processes similar to those used to obtain refined oils applied to refined oils which have been already used in service. Such re-refined oils are also known as reclaimed or reprocessed oils and often are additionally processed by techniques for approval of spent additive and oil breakdown products.

Hence, the base oil which may be used to make the present lubricating oil composition may be selected from any of the base oils in Groups I-V as specified in the American Petroleum Institute (API) Base Oil Interchangeability Guidelines (API Publication 1509). Such base oil groups are summarized in Table 1 below:

**Table 1**

| | Base Oil Properties | | |
|---|---|---|---|
| Group [a] | Saturates[b], wt. % | Sulfur[c], wt. % | Viscosity Index[d] |
| Group I | <90 and/or | >0.03 | 80 to <120 |
| Group II | ≥90 | ≤0.03 | 80 to <120 |
| Group III | ≥90 | ≤0.03 | ≥120 |
| Group IV | Polyalphaolefins (PAOs) | | |
| Group V | All other base stocks not included in Groups I, II, III or IV | | |

[a] Groups I-III are mineral oil base stocks.
[b] Determined in accordance with ASTM D2007.
[c] Determined in accordance with ASTM D2622, ASTM D3120, ASTM D4294 or ASTM D4927.
[d] Determined in accordance with ASTM D2270.

Base oils suitable for use herein are any of the variety corresponding to API Group I, Group II, Group III, Group IV, and Group V oils and combinations thereof, preferably the Group III to Group V oils due to their exceptional volatility, stability, viscometric and cleanliness features.

The oil of lubricating viscosity for use in the lubricating oil compositions of this disclosure, also referred to as a base oil, is typically present in a major amount, e.g., an amount of greater than 50 wt. %, preferably greater than about 70 wt. %, more preferably from about 80 to about 99.5 wt. % and most preferably from about 85 to about 98 wt. %, based on the

total weight of the composition. The expression "base oil" as used herein shall be understood to mean a base stock or blend of base stocks which is a lubricant component that is produced by a single manufacturer to the same specifications (independent of feed source or manufacturer's location); that meets the same manufacturer's specification; and that is identified by a unique formula, product identification number, or both. The base oil for use herein can be any presently known or later-discovered oil of lubricating viscosity used in formulating lubricating oil compositions for any and all such applications, e.g., engine oils, marine cylinder oils, functional fluids such as hydraulic oils, gear oils, transmission fluids, etc. Additionally, the base oils for use herein can optionally contain viscosity index improvers, e.g., polymeric alkylmethacrylates; olefinic copolymers, e.g., an ethylene-propylene copolymer or a styrenebutadiene copolymer; and the like and mixtures thereof.

As one skilled in the art would readily appreciate, the viscosity of the base oil is dependent upon the application. Accordingly, the viscosity of a base oil for use herein will ordinarily range from about 2 to about 2000 centistokes (cSt) at 100° Centigrade (C.). Generally, individually the base oils used as engine oils will have a kinematic viscosity range at 100° C. of about 2 cSt to about 30 cSt, preferably about 3 cSt to about 16 cSt, and most preferably about 4 cSt to about 12 cSt and will be selected or blended depending on the desired end use and the additives in the finished oil to give the desired grade of engine oil, e.g., a lubricating oil composition having an SAE Viscosity Grade of 0W, 0W-8, 0W-12, 0W-16, 0W-20, 0W-26, 0W-30, 0W-40, 0W-50, 0W-60, 5W, 5W-20, 5W-30, 5W-40, 5W-50, 5W-60, 10W, 10W-20, 10W-30, 10W-40, 10W-50, 15W, 15W-20, 15W-30, 15W-40, 30, 40 and the like.

**Mg Detergent**

Preferred magnesium-containing detergents include magnesium sulfonates, magnesium phenates, and magnesium salicylates, especially magnesium sulfonates and salicylates.

Salicylate detergents may be prepared by reacting a basic metal compound with at least one carboxylic acid and removing water from the reaction product. Detergents made from salicylic acid are one class of detergents prepared from carboxylic acids. Useful salicylates include long chain alkyl salicylates. One useful family of compositions is of the following structure (5):

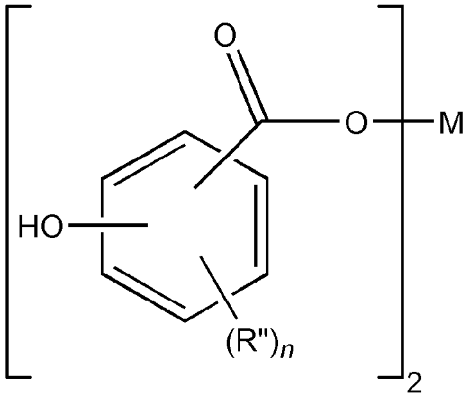

wherein R" is a $C_1$ to $C_{30}$ (e.g., $C_{13}$ to $C_{30}$) alkyl group; *n* is an integer from 1 to 4; and M is magnesium.

Hydrocarbyl-substituted salicylic acids may be prepared from phenols by the Kolbe reaction (see U.S. Patent No. 3,595,791). The metal salts of the hydrocarbyl-substituted salicylic acids may be prepared by double decomposition of a metal salt in a polar solvent such as water or alcohol.

In one aspect of the present disclosure, the salicylate is derived from $C_{10}$-$C_{40}$ isomerized NAO and is made from an alkylphenol with an alkyl group derived from an isomerized NAO having an isomerization level (i) from about 0.10 to about 0.40, preferably from about 0.10 to about 0.35, preferably from about 0.10 to about 0.30, and more preferably from about 0.12 to about 0.30. In another aspect of the present disclosure, the salicylate is derived from $C_{20}$-$C_{24}$ isomerized NAO.

A typical detergent is an anionic material that contains a long chain hydrophobic portion of the molecule and a smaller anionic or oleophobic hydrophilic portion of the molecule. The anionic portion of the detergent is typically derived from an organic acid such as a sulfur acid, carboxylic acid, phosphorous acid, phenol, or mixtures thereof. The counterion is typically an alkaline earth or alkali metal.

Salts that contain a substantially stoichiometric amount of the metal are described as neutral salts and have a total base number (TBN) of from 0 to 80 mg KOH/g. Many compositions are overbased, containing large amounts of a metal base that is achieved by reacting an excess of a metal compound (e.g., a metal hydroxide or oxide) rich an acidic gas (e.g., carbon dioxide). Useful detergents can be neutral, mildly overbased, or highly overbased.

It is desirable for at least some detergent used in the detergent mixture to be overbased. Overbased detergents help neutralize acidic impurities produced by the combustion process and become entrapped in the oil. Typically, the overbased material has a ratio of metallic ion to anionic portion of the detergent of 1.05:1 to 50:1 (e.g., 4:1 to 25:1) on an equivalent basis. The resulting detergent is an overbased detergent that will typically have a TBN of 150 mg KOH/g or higher (e.g., 250 to 450 mg KOH/g or more). A mixture of detergents of differing TBN can be used.

Sulfonates may be prepared from sulfonic acids which are typically obtained by the sulfonation of alkyl-substituted aromatic hydrocarbons such as those obtained from the fractionation of petroleum or by the alkylation of aromatic hydrocarbons. Examples included those obtained by alkylating benzene, toluene, xylene, naphthalene, diphenyl or their halogen derivatives. The alkylation may be carried out in the presence of a catalyst with alkylating agents having from about 3 to more than 70 carbon atoms. The alkaryl sulfonates usually contain from about 9 to 80 or more carbon atoms (e.g., about 16 to 60 carbon atoms) per alkyl substituted aromatic moiety.

Phenates can be prepared by reacting an alkaline earth metal hydroxide or oxide (e.g., CaO, $Ca(OH)_2$, MgO, or $Mg(OH)_2$) with an alkyl phenol or sulfurized alkylphenol. Useful alkyl groups include straight or branched chain $C_1$ to $C_{30}$ (e.g., $C_4$ to $C_{20}$) alkyl groups, or mixtures thereof. Examples of suitable phenols include isobutylphenol, 2-ethylhexylphenol, nonylphenol, dodecyl phenol, and the like. It should be noted that starting alkylphenols may contain more than one alkyl substituent that are each independently straight chain or branched chain. When a non-sulfurized alkylphenol is used, the sulfurized product may be obtained by methods well known in the art. These methods include heating a mixture of alkylphenol and sulfurizing agent (e.g., elemental sulfur, sulfur halides such as sulfur dichloride, and the like) and then reacting the sulfurized phenol with an alkaline earth metal base.

The magnesium-containing detergent may be used in an amount that provides at least 100 to 2000 ppm, at least 100 to 1500 ppm, at least 100 to 1200 ppm, at least 100 to 1100 ppm, at least 100 to 1000 ppm, at least 200 ppm to 2000 ppm, at least 300 to 1500 ppm, at least 300 to 1200 ppm, at least 300 to 1200 ppm, at least 300 to 1100 ppm, at least 300 to 1000 ppm, or at least 400 to 1000 ppm by weight of magnesium to the lubricating oil composition.

## Boron-Containing Dispersant

Examples of borated dispersants include borated ashless dispersants such as borated polyalkenyl succinic anhydrides; borated non-nitrogen containing derivatives of a polyalkylene succinic anhydride; borated basic nitrogen compounds selected from the group consisting of succinimides, carboxylic acid amides, hydrocarbyl monoamines, hydrocarbyl polyamines, Mannich bases, phosphonoamides, thiophosphonamides and phosphoramides, thiazoles (e.g., 2,5-dimercapto-1,3,4-thiadiazoles, mercaptobenzothiazoles and derivatives thereof), triazoles (e.g., alkyltriazoles and benzotriazoles), copolymers which contain a carboxylate ester with one or more additional polar function, including amine, amide, imine, imide, hydroxyl, carboxyl, and the like (e.g., products prepared by copolymerization of long chain alkyl acrylates or methacrylates with monomers of the above function); and the like and combinations thereof. A preferred borated dispersant is a succinimide derivative of boron such as, for example, a borated polyisobutenyl succinimide.

Examples of borated ashless dispersants are the borated ashless hydrocarbyl succinimide dispersants prepared by reacting a hydrocarbyl succinic acid or anhydride with an amine. Preferred hydrocarbyl succinic acids or anhydrides are those where the hydrocarbyl group is derived from a polymer of a $C_3$ or $C_4$ monoolefin, especially a polyisobutylene wherein the polyisobutenyl group has a number average molecular weight (Mn) of from 700 to 5,000, more preferably from 900 to 2,500. Such dispersants generally have at least 1, preferably 1 to 2, more preferably 1.1 to 1.8, succinic groups for each polyisobutenyl group. In one embodiment, the oil soluble or oil dispersible borated polyisobutylene succinimide dispersant, is derived from a polyisobutylene group having a number average molecular weight of from about 550 to about 5000. In one embodiment, the oil soluble or oil dispersible borated polyisobutylene succinimide dispersant, is derived from a polyisobutylene group having a number average molecular weight of from about 550 to about 4000. In one embodiment, the oil soluble or oil dispersible borated polyisobutylene succinimide dispersant, is derived from a polyisobutylene group having a number average molecular weight of from about 550 to about 3000. In one embodiment, the oil soluble or oil dispersible borated polyisobutylene succinimide dispersant is derived from a polyisobutylene group having a number average molecular weight of greater than 550 to about 2300. In one embodiment, the oil soluble or oil dispersible borated polyisobutylene succinimide dispersant, is derived from a polyisobutylene group having a number average molecular weight of from about 950 to about 2300. In one embodiment, the oil soluble or oil dispersible borated polyisobutylene succinimide dispersant, is derived from a polyisobutylene group having a number average molecular weight of from about 950 to about 1300. In one embodiment, the oil soluble or oil dispersible borated polyisobutylene succinimide dispersant is derived from a polyisobutylene group having a number average molecular weight of about 2300. In one embodiment, the oil soluble or oil dispersible borated polyisobutylene succinimide dispersant is derived from a polyisobutylene group having a number average molecular weight of about 1300. In one embodiment, the oil soluble or oil dispersible borated polyisobutylene succinimide dispersant, is derived from a polyisobutylene group having a number average molecular weight of about 1000.

Preferred amines for reaction to form the succinimide are polyamines having from 2 to 60 carbon atoms and from

2 to 12 nitrogen atoms per molecule, and particularly preferred are the polyalkyleneamines represented by the formula:

$$NH_2(CH_2)_n\text{-}(NH(CH_2)_n)_m\text{-}NH_2$$

wherein n is 2 to 3 and m is 0 to 10. Illustrative are ethylene diamine, diethylene triamine, triethylene tetramine, tetraethylene pentamine, tetrapropylene pentamine, pentaethylene hexamine and the like, as well as the commercially available mixtures of such polyamines. Amines including other groups such as hydroxy, alkoxy, amide, nitride and imidazoline groups may also be used, as may polyoxyalkylene polyamines. The amines are reacted with the alkenyl succinic acid or anhydride in conventional ratios of about 1:1 to 10:1, preferably 1:1 to 3:1, moles of alkenyl succinic acid or anhydride to polyamine, and preferably in a ratio of about 1:1, typically by heating the reactants to from 100° to 250° C., preferably 125° to 175°C. for 1 to 10, preferably 2 to 6, hours.

The boration of alkenyl succinimide dispersants is also well known in the art as disclosed in U.S. Pat. Nos. 3,087,936 and 3,254,025. The succinimide may for example be treated with a boron compound selected from the group consisting of boron, boron oxides, boron halides, boron acids and esters thereof, in an amount to provide from 0.1 atomic proportion of boron to 10 atomic proportions of boron for each atomic proportion of nitrogen in the dispersant.

The borated product will generally contain 0.1 to 2.0, preferably 0.2 to 0.8 weight percent boron based upon the total weight of the borated dispersant. Boron is considered to be present as dehydrated boric acid polymers attaching at the metaborate salt of the imide. The boration reaction is readily carried out adding from 1 to 3 weight percent (based on the weight of dispersant) of said boron compound, preferably boric acid, to the dispersant as a slurry in mineral oil and heating with stirring from 135 °C to 165 °C for 1 to 5 hours followed by nitrogen stripping filtration of the product. Alternatively, boric acid may be added to the hot reaction mixture of succinic acid or anhydride and amine while removing water.

The boron-containing dispersant is present in an amount sufficient to provide from at least 30 to 1000 ppm, at least 30 to 900 ppm, at least 30 to 800 ppm, at least 30 to 700 ppm, at least 30 to 600 ppm, at least 30 to 500 ppm, at least 30 to 400 ppm, at least 30 to 350 ppm, at least 30 to 300 ppm, at least 40 to 1000 ppm, at least 40 to 900 ppm, at least 40 to 800 ppm, at least 40 to 700 ppm, at least 40 to 600 ppm, at least 40 to 500 ppm, at least 40 to 400 ppm, at least 40 to 350 ppm, at least 40 to 300 ppm, at least 50 to 1200 ppm, at least 50 to 1000 ppm, at least 50 to 900 ppm, at least 50 to 800 ppm, at least 50 to 700 ppm, at least 50 to 600 ppm, at least 100 to 600 ppm, at least 100 to 500 ppm, at least 100 to 400 ppm, or at least 100 to 300 ppm of boron based on the total weight of the lubricating oil composition.

## Additional Lubricating Oil Additives

The lubricating oil compositions of the present disclosure may also contain other conventional additives that can impart or improve any desirable property of the lubricating oil composition in which these additives are dispersed or dissolved. Any additive known to a person of ordinary skill in the art may be used in the lubricating oil compositions disclosed herein. Some suitable additives have been described in Mortier et al., "Chemistry and Technology of Lubricants", 2nd Edition, London, Springer, (1996); and Leslie R. Rudnick, "Lubricant Additives: Chemistry and Applications", New York, Marcel Dekker (2003), both of which are incorporated herein by reference. For example, the lubricating oil compositions can be blended with antioxidants, anti-wear agents, detergents such as metal detergents, rust inhibitors, dehazing agents, demulsifying agents, metal deactivating agents, friction modifiers, pour point depressants, antifoaming agents, co-solvents, corrosion-inhibitors, dispersants, multifunctional agents, dyes, extreme pressure agents and the like and mixtures thereof. A variety of the additives are known and commercially available. These additives, or their analogous compounds, can be employed for the preparation of the lubricating oil compositions of the disclosure by the usual blending procedures.

In the preparation of lubricating oil formulations, it is common practice to introduce the additives in the form of 10 to 100 wt. % active ingredient concentrates in hydrocarbon oil, e.g. mineral lubricating oil, or other suitable solvent.

Usually these concentrates may be diluted with 3 to 100, e.g., 5 to 40, parts by weight of lubricating oil per part by weight of the additive package in forming finished lubricants, e.g. crankcase motor oils. The purpose of concentrates, of course, is to make the handling of the various materials less difficult and awkward as well as to facilitate solution or dispersion in the final blend.

Each of the foregoing additives, when used, is used at a functionally effective amount to impart the desired properties to the lubricant. Thus, for example, if an additive is a friction modifier, a functionally effective amount of this friction modifier would be an amount sufficient to impart the desired friction modifying characteristics to the lubricant.

In general, the concentration of each of the additives in the lubricating oil composition, when used, may range from about 0.001 wt. % to about 20 wt. %, from about 0.01 wt. % to about 15 wt. %, or from about 0.1 wt. % to about 10 wt. %, from about 0.005 wt.% to about 5 wt.%, or from about 0.1 wt.% to about 2.5 wt.%, based on the total weight of the lubricating oil composition. Further, the total amount of the additives in the lubricating oil composition may range from about 0.001 wt.% to about 20 wt.%, from about 0.01 wt.% to about 10 wt.%, or from about 0.1 wt.% to about 5 wt.%, based on the total weight of the lubricating oil composition.

The following examples are presented to exemplify embodiments of the disclosure but are not intended to limit the disclosure to the specific embodiments set forth. Unless indicated to the contrary, all parts and percentages are by weight. All numerical values are approximate. When numerical ranges are given, it should be understood that embodiments outside the stated ranges may still fall within the scope of the disclosure. Specific details described in each example should not be construed as necessary features of the disclosure.

It will be understood that various modifications may be made to the embodiments disclosed herein. Therefore, the above description should not be construed as limiting, but merely as exemplifications of preferred embodiments. For example, the functions described above and implemented as the best mode for operating the present disclosure are for illustration purposes only. Other arrangements and methods may be implemented by those skilled in the art without departing from the scope and spirit of this disclosure. Moreover, those skilled in the art will envision other modifications within the scope and spirit of the claims appended hereto.

## EXAMPLES

The following examples are intended for illustrative purposes only and do not limit in any way the scope of the present disclosure.

The lubricating oils were evaluated by the ASTM methods below.

The samples were tested in accordance with a modified ASTM D7563 method. ASTM D7563 measures the ability of an oil to emulsify water and E85 fuel. In this modification the lubricating oil is mixed with 10% water and emulsion stability will be tracked after 24 hours at 25°C. Afterwards, the amount of oil, water, and emulsion was observed and reported. D7563 only defines "non-aqueous" or "aqueous" layer, and thus we further divided "non-aqueous" layer into brown and white (you can also call it, oily layer and emulsion layer). In this test, if emulsion layer is more than 50%, it is deemed to be a pass.

In ASTM D7563, more emulsion layer is desirable as it is an indication of water being well and evenly dispersed in the system, an emulsion is desirable. This is a test to check and evaluate the stability of engine oil in respect of whether any (condensed) water or E85 fuel and the like that has become mixed with it does not deposit out on surfaces but remains incorporated in emulsion form without separating out and/or being condensed in a than layer, so that the individual engine components do not rust or corrode.

## Baseline formulation

A lubricating oil composition was prepared by blending together the following components to obtain an SAE 0W-20 viscosity grade formulation:

approximately 770 ppm, in terms of phosphorus content, of a mixture of primary and secondary zinc dialkyldithiophosphate;
an alkylated diphenylamine antioxidant;
an ethylene propylene VII;
conventional amounts of pour point depressant,
foam inhibitor; and
the balance a mixture of Group III base oil.

## Detergent A

Detergent A is $C_{20}$-$C_{24}$ magnesium sulfonate detergent, made from alpha olefin. Properties: TBN (mg KOH/g) = 400; Mg (wt.%) = 9.4.

## Detergent B

A slurry of MgO (82 grams) in MeOH (81.4 grams) and xylene (500 grams) is prepared and introduced into a reactor. Then the hydroxybenzoic acid made from isomerized alpha olefin (C20-24, 0.16 isomerization level), (1774 grams, 43% active in xylene) is loaded into the reactor and the temperature kept at 40°C for 15 minutes. Then dodecenylanhydride (DDSA, 7.6 grams) followed by AcOH (37.3 grams) then $H_2O$ (69 grams) are introduced in the reactor over 30 minutes while the temperature is ramped up to 50°C. $CO_2$ is then introduced in the reactor under strong agitation (96 grams). Then a slurry consisting of MgO (28 grams) in xylene (200 grams) is introduced in the reactor and a further quantity of $CO_2$ is bubbled through the mixture. At the end of $CO_2$ introduction, distillation of the solvent is accomplished by heating to 132 °C . 500 grams of base oil is then introduced in the reactor. The mixture is then centrifuged in a lab centrifuge to remove unreacted magnesium oxide and other solid. Finally, the mixture is heated at 170°C under

vacuum (15 mbar) to remove the xylene and to lead to the final product containing 4.3% Magnesium as a $C_{20}$-$C_{24}$ magnesium salicylate detergent, made from isomerized NAO with isomerization level of 0.16. Properties: TBN (mgKOH/g) = 199 in 35 wt% of diluent oil.

**Detergent C**

Detergent C is $C_{14}$-$C_{18}$ magnesium salicylate detergent, made from alpha olefin. Properties: TBN (mgKOH/g) = 236; Mg (wt.%) = 5.34.

**Detergent D**

Detergent D is a $C_{14}$-$C_{18}$ magnesium salicylate detergent, available from Infineum International Ltd under the trade designation "Infineum C9012". Properties: TBN (mgKOH/g) = 345; Mg (wt.%) = 7.45.

**Example 1**

To the formulation baseline was added approximately 1040 ppm of Mg from detergent A and a borated bis-succinimide dispersant with a Mn of approximately 1300.

**Example 2**

To the formulation baseline was added approximately 1040 ppm of Mg from detergent B and a borated bis-succinimide dispersant with a Mn of approximately 1300.

**Example 3**

To the formulation baseline was added approximately 1040 ppm of Mg from detergent C and a borated bis-succinimide dispersant with a Mn of approximately 1300.

**Example 4**

To the formulation baseline was added approximately 1040 ppm of Mg from detergent D and a borated bis-succinimide dispersant with a Mn of approximately 1300.

**Example 5**

To the formulation baseline was added approximately 520 ppm of Mg from detergent C and a borated bis-succinimide dispersant with a Mn of approximately 1300.

**Example 6**

To the formulation baseline was added approximately 130 ppm of Mg from detergent C and a borated bis-succinimide dispersant with a Mn of approximately 1300.

**Comparative Example 1**

To the formulation baseline was added approximately 1050 ppm of Mg from detergent A and non-post treated bis-succinimide dispersant.

**Comparative Example 2**

To the formulation baseline was added approximately 1030 ppm of Mg from detergent A and an ethylene carbonate post-treated bis-succinimide dispersant.

**Comparative Example 3**

To the formulation baseline was added approximately 1050 ppm of Mg from detergent B and non-post treated bis-succinimide dispersant.

**Comparative Example 4**

To the formulation baseline was added approximately 1050 ppm of Mg from detergent C and non-post treated bis-succinimide dispersant.

**Comparative Example 5**

To the formulation baseline was added approximately 1050 ppm of Mg from detergent D and non-post treated bis-succinimide dispersant.

**TABLE 2**

| | **Detergent Type** | **Mg (ppm)** | **Dispersant Type** | ASTM D7563 Result |
|---|---|---|---|---|
| **Example 1** | A | 1040 | Borated succinimide | Pass |
| **Example 2** | B | 1040 | Borated | Pass |
| **Example 3** | C | 1040 | Borated | Pass |
| **Example 4** | D | 1040 | Borated | Pass |
| **Example 5** | C | 520 | Borated | Pass |
| **Example 6** | C | 130 | Borated | Pass |
| **Comp. ex. 1** | A | 1050 | Non-post-treated succinimide | Fail |
| **Comp. ex. 2** | A | 1030 | EC-treated succinimide | Fail |
| **Comp. ex. 3** | B | 1050 | Non-post-treated succinimide | Fail |
| **Comp. ex. 4** | C | 1050 | Non-post-treated succinimide | Fail |
| **Comp. ex. 5** | D | 1050 | Non-post-treated succinimide | Fail |

The isomerization level was measured by an NMR method.

***Isomerization level (I) and NMR method***

The isomerization level (I) of the olefin was determined by hydrogen-1 (1H) NMR. The NMR spectra were obtained on a Bruker Ultrashield Plus 400 in chloroform-d1 at 400 MHz using TopSpin 3.2 spectral processing software.

The isomerization level (I) represents the relative amount of methyl groups ($-CH_3$) (chemical shift 0.30-1.01 ppm) attached to the methylene backbone groups ($-CH_2-$) (chemical shift 1.01-1.38 ppm) and is defined by the Formula as shown below,

$$I = m/(m+n)$$

where m is NMR integral for methyl groups with chemical shifts between 0.30 ± 0.03 to 1.01 ± 0.03 ppm, and n is NMR integral for methylene groups with chemical shifts between 1.01 ± 0.03 to 1.38 ± 0.10 ppm.

For the avoidance of doubt, the present application is directed to the subject-matter described in the following numbered paragraphs (referred to as "para"):

1. A method for maintaining emulsion stability in a hybrid engine, said method comprising lubricating and operating the hybrid engine with a lubricating oil composition comprising:

    a. a major amount of an oil of lubricating viscosity;
    b. a minor amount of a magnesium containing detergent; and
    c. a minor amount of a borated dispersant.

2. The method of para 1, wherein the magnesium detergent is a magnesium sulfonate or a magnesium salicylate detergent.

3. The method of para 1, wherein the magnesium containing detergent is derived from an isomerized normal alpha

olefin.

4. The method of para 3, wherein the isomerized normal alpha olefin has an isomerization level (I) of the normal alpha olefin of from about 0.1 to about 0.4.

5. The method of para 4, wherein the isomerized normal alpha olefin has an isomerization level (I) of the normal alpha olefin of from about 0.1 to about 0.3.

6. The method of para 4, wherein the isomerized normal alpha olefin has an isomerization level (I) of the normal alpha olefin of from about 0.16 to about 0.27.

7. The method of para 1, wherein the magnesium containing detergent is present in amount to provide about 50 ppm to 1500 ppm of magnesium.

8. A method of operating a hybrid engine, said method comprising:
lubricating and operating the hybrid engine with the lubricating oil composition comprising:

a. a major amount of an oil of lubricating viscosity;
b. a minor amount of a magnesium containing detergent; and
c. a minor amount of a borated dispersant.

9. The method of para 8, wherein the lubricating oil composition improves emulsification of water and/or fuel contamination in the hybrid engine as determined by ASTM D7563 modified to include 10% water in the lubricating oil composition.

10. The use of a lubricating oil composition to improve emulsification of water and/or fuel contamination in a hybrid engine comprising:
providing to the hybrid engine a lubricating oil composition comprising:

a. a major amount of an oil of lubricating viscosity;
b. a minor amount of a magnesium containing detergent; and
c. a minor amount of a borated dispersant.

## Claims

**1.** A method for maintaining emulsion stability in a hybrid engine, said method comprising lubricating and operating the hybrid engine with a lubricating oil composition comprising:

a. a major amount of an oil of lubricating viscosity;
b. a minor amount of a magnesium containing detergent; and
c. a minor amount of a borated dispersant.

**2.** The method of claim 1, wherein the magnesium detergent is a magnesium sulfonate, magnesium phenate or a magnesium salicylate detergent.

**3.** The method of claim 1, wherein the magnesium detergent is of the following structure:

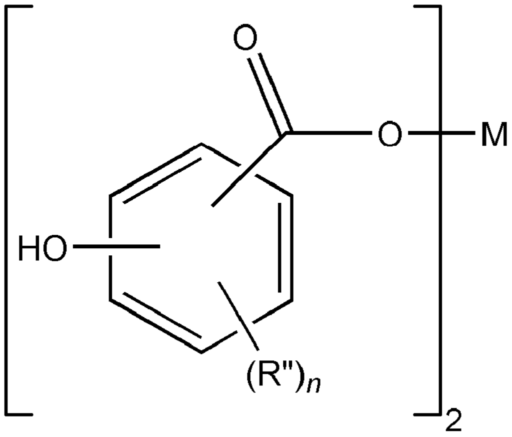

wherein R" is a $C_1$ to $C_{30}$, for example, $C_{13}$ to $C_{30}$, alkyl group; n is an integer from 1 to 4; and M is magnesium.

**4.** The method of claim 1, wherein the magnesium containing detergent is derived from an isomerized normal alpha olefin.

**5.** The method of claim 4, wherein the isomerized normal alpha olefin has an isomerization level (I) of the normal alpha olefin of from about 0.1 to about 0.4.

**6.** The method of claim 5, wherein the isomerized normal alpha olefin has an isomerization level (I) of the normal alpha olefin of from about 0.1 to about 0.3.

**7.** The method of claim 5, wherein the isomerized normal alpha olefin has an isomerization level (I) of the normal alpha olefin of from about 0.16 to about 0.27.

**8.** The method of claim 1, wherein the magnesium containing detergent is present in amount to provide about 50 ppm to 1500 ppm of magnesium.

**9.** A method of operating a hybrid engine, said method comprising:

lubricating and operating the hybrid engine with the lubricating oil composition comprising:

a. a major amount of an oil of lubricating viscosity;
b. a minor amount of a magnesium containing detergent; and
c. a minor amount of a borated dispersant;

wherein the lubricating oil composition improves emulsification of water and/or fuel contamination in the hybrid engine as determined by ASTM D7563 modified to include 10% water in the lubricating oil composition.

**10.** The method of any preceding claim, wherein the magnesium detergent is present in an amount to provide at least 100 to 1100 ppm of magnesium and/or wherein the borated dispersant is present in an amount to provide least 30 to 1000 ppm, at least 30 to 900 ppm, at least 30 to 800 ppm, at least 30 to 700 ppm, at least 30 to 600 ppm, at least 30 to 500 ppm, at least 30 to 400 ppm, at least 30 to 350 ppm, at least 30 to 300 ppm, at least 40 to 1000 ppm, at least 40 to 900 ppm, at least 40 to 800 ppm, at least 40 to 700 ppm, at least 40 to 600 ppm, at least 40 to 500 ppm, at least 40 to 400 ppm, at least 40 to 350 ppm, at least 40 to 300 ppm, at least 50 to 1200 ppm, at least 50 to 1000 ppm, at least 50 to 900 ppm, at least 50 to 800 ppm, at least 50 to 700 ppm, at least 50 to 600 ppm, at least 100 to 600 ppm, at least 100 to 500 ppm, at least 100 to 400 ppm, or at least 100 to 300 ppm of boron based on the total weight of the lubricating oil composition.

**11.** The method of any preceding claim, wherein the borated dispersant is an oil soluble or oil dispersible borated polyisobutylene succinimide dispersant, optionally derived from a polyisobutylene group having a number average molecular weight of from about 550 to about 5000, for example, from about 550 to about 2300, or from about 950 to about 2300, or from about 950 to about 1300.

**12.** The method of any preceding claim, wherein the lubricating oil composition further comprises additives selected from antioxidant, anti-wear agent, detergent other than the magnesium detergent, rust inhibitor, dehazing agent, demulsifying agent, metal deactivating agent, friction modifier, pour point depressant, antifoaming agent, cosolvent, corrosion-inhibitor, dispersant other than the borated dispersant, dye, extreme pressure agent or mixtures thereof, optionally wherein the total amount of the additives in the lubricating oil composition ranges from about 0.001 wt. % to about 20 wt. %, for example, from about 0.01 wt. % to about 10 wt. %, or from about 0.1 to 5 wt. %, based on the total weight of the lubricating oil composition.

**13.** The use of a lubricating oil composition to improve emulsification of water and/or fuel contamination in a hybrid engine comprising:
providing to the hybrid engine a lubricating oil composition comprising:

a. a major amount of an oil of lubricating viscosity;
b. a minor amount of a magnesium containing detergent; and
c. a minor amount of a borated dispersant.

**14.** The use of a minor amount of a magnesium containing detergent and a minor amount of a borated dispersant in a lubricating oil composition comprising a major amount of an oil of lubricating viscosity, that is provided to a hybrid engine, to improve emulsification of water and/or fuel contamination in the hybrid engine.

**15.** The use of claim 13 or 14, wherein the lubricating oil composition is as defined in any of claims 1-12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4320019 A
- US 3595791 A
- US 3087936 A
- US 3254025 A

### Non-patent literature cited in the description

- CRC Handbook of Chemistry and Physics. 2000
- **MORTIER et al.** Chemistry and Technology of Lubricants. Springer, 1996
- **LESLIE R. RUDNICK**. Lubricant Additives: Chemistry and Applications. Marcel Dekker, 2003